# EUROPÄISCHE PATENTANMELDUNG

(11) **EP 1 652 644 A1**
(43) Veröffentlichungstag der Anmeldung: **03.05.2006**
(21) Anmeldenummer: 05109216.1
(22) Anmeldetag: 05.10.2005
(51) Int. Cl.: B29C 33/38, B29C 33/42, B29C 33/10, B29L 30/00

(54) **Reifenvulkanisierform mit einer profilierten Formfläche aus gesintertem Material**

(30) Priorität: 30.10.2004 DE 102004052766
(71) Anmelder: Continental Aktiengesellschaft, 30165 Hannover (DE)
(72) Erfinder: Komornik, Inna, 30165 Hannover (DE); Wenzel, Karsten, 31691 Helpsen (DE); Köhne, Stephan, 52146 Würselen (DE)

(57) **Zusammenfassung**

Offenbart wird eine Reifenvulkanisierform mit mehreren zu einer umfangsmäßig geschlossenen Form zusammenfügbaren Profilsegmenten (1), welche jeweils einen außenseitigen Grundkörper (2) und innenseitig jeweils eine profilierte Formfläche (3) aus gesintertem Material aufweisen und mit sich ausgehend von dieser Formfläche durch das jeweilige Profilsegment nach außen erstreckenden Luftableitwegen versehen sind, wobei zumindest ein Teil der Luftableitwege wenigstens formflächenseitig aus einer Vielzahl von miteinander in Verbindung stehenden Mikrokanälen und Mikroporen (6) besteht, wobei sich die Luftableitwege zumindest teilweise bis zur Rückenfläche des Profilsegments erstrecken. Erfindungsgemäß zeichnet sich die Reifenvulkanisierform dadurch aus, dass in die Formfläche ein Lamellenkörper (9) eingesetzt ist.

## Beschreibung

Reifenvulkanisierform mit mehreren zu einer umfangsmäßig geschlossenen Form zusammenfügbaren Profilsegmenten

Die Erfindung betrifft eine Reifenvulkanisierform mit mehreren zu einer umfangsmäßig geschlossenen Form zusammenfügbaren Profilsegmenten gemäß dem Oberbegriff des Patentanspruchs 1 sowie ein Verfahren zu deren Herstellung.

In Reifenvulkanisierformen wird der auf den Reifenunterbau aufgebrachte Laufflächenstreifen aus Kautschukmaterial zu dem gewünschten Profil geformt und unter Wärmeeinwirkung zu Gummi vulkanisiert. Bei diesem Vorgang muss die zwischen Laufflächenstreifen und Formfläche vorhandene Luft abgeführt werden, um einwandfreie Ausformung des Reifenprofils zu gewährleisten.

Bekannte Reifenvulkanisierformen weisen hierfür einerseits in ihrer Formfläche mündende Entlüftungskanäle oder -bohrungen auf, welche andererseits direkt oder über weitere Entlüftungskanäle an einer Außenfläche der Form münden. Die Form besteht dabei üblicherweise aus mehreren umfangsmäßig zusammenfügbaren Profilsegmenten mit je einer Formfläche, die bei zusammengesetzten Profilsegmenten zusammen mit seitlichen Formwänden die Gesamtform bilden, aus der sich die äußere Kontur des Luftreifens ergibt.

Bei bekannten Profilsegmentsystemen werden die in der Formfläche der Profilsegmente mündenden Entlüftungskanäle durch gebohrte Ausnehmungen gebildet, in welche verschließbare Entlüftungsventile einsetzbar sind. Um eine ausreichende Entlüftung der Vulkanisierform, insbesondere auch in Nischen des Profils zu gewährleisten, muss eine Vielzahl solcher Entlüftungskanäle, üblicherweise zwei- bis dreitausend pro Vulkanisierform, vorgesehen werden. Dies führt zu einem erheblichen Kosten- und Zeitaufwand für die Herstellung der Reifenvulkanisierform.

Ein weiterer Nachteil bekannter Profilsegmentsysteme besteht darin, dass beim Ausvulkanisieren des Fahrzeugluftreifens Kautschukmaterial in die Entlüftungskanäle gepresst bzw. gesogen werden kann. Die dadurch entstehenden Austriebe bleiben auf dem fertigen Fahrzeugluftreifen erhalten und müssen vor dessen Verwendung mit eigens dafür vorgesehenen Maschinen entfernt werden. Dieses sogenannte Trimmen führt zu einer Verlängerung und Verteuerung des Herstellungsprozesses des Fahrzeugluftreifens.

Aus der DE 43 41 683 A1 und der EP 0 868 955 A1 sind bereits gattungsgemäße Profilsegmente beschrieben, bei welchem zumindest die Formfläche aus einem gesinterten und porösen Material besteht. Material- und herstellungsbedingt weisen die Formflächen eine Vielzahl von Mikrokanälen und Mikroporen auf, welche miteinander in Verbindung stehen. Durch diese Mikrokanäle oder Mikroporen wird Luft abgeführt und formaußenseitig angeordneten zentralen Luftabfuhrkanälen größeren Durchmessers zugeführt. Derartige Mikrokanäle oder Mikroporen weisen den Vorteil auf, dass kein Einsatz von Entlüftungsventilen bzw. das Ausführen von Entlüftungsausnehmungen nötig wird. Die in den genannten Dokumenten beschriebenen Materialien, insbesondere keramische Werkstoffe, sind jedoch relativ teuer und lassen weniger gestalterische Möglichkeiten zu, als dass dies mit üblichen metallischen Werkstoffen, insbesondere Stahl oder Aluminium, möglich ist.

Die Abfuhr von Luft aus der Reifenvulkanisierform ist jedoch nur eines einer Reihe von Problemen, mit denen sich der Fachmann konfrontiert sieht. Ein weiteres praxisrelevantes Problem entsteht beim Einsetzen von Lamellenformteilen zum Formen von Feineinschnitten insbesondere in Winterreifen. Diese Lamellenformteile, welche üblicherweise aus einzelnen Blechen bestehen oder auch als einstückiger Formkörper ausgebildetet sein können, werden üblicherweise in eigens dazu in die Formoberfläche eingefräste Schlitze eingesetzt und mit der Form verbunden. Das Einsetzen der Lamellenformteile allein ist schon nicht unproblematisch, da die Schlitze möglichst eng sein sollen und dazu noch der entsprechenden Konfiguration der Lamellenformteile entsprechen müssen. Hinzu kommt, das Problem, dass die Lamellenformteile jeweils kleine Inseln der Formoberfläche einschließen, die separat entlüftet werden müssen. Hierzu ist es also entsprechend erforderlich, in Räume von Lamellenformteilen umschlossene Bereiche jeweils Lüftungsbohrungen einzubringen, um Luft aus diesen abgeschlossenen Regionen abführen zu können. Wird ein besonders dichtes und enges Netz von Lamellenformteilen auf die Formoberfläche aufgesetzt beziehungsweise in diese eingebracht, ist es irgendwann fast unmöglich eine entsprechende Anzahl von Bohrungen in diese sehr engen Räume einzubringen.

Aufgabe der Erfindung ist es, eine Reifenvulkanisierform zu schaffen, die schnell und preiswert herzustellen ist.

Diese Aufgabe wird mit einer Reifenvulkanisierform gelöst, welche die Merkmale des Patentanspruchs 1 aufweist.

Erfindungsgemäß besteht eine Reifenvulkanisierform aus mehreren zu einer umfangsmäßig geschlossenen Form zusammenfügbaren Profilsegmenten, welche jeweils außenseitig aus einem Segmentgrundkörper und innenseitig jeweils aus einer profilierten Formfläche aus gesinterten Material aufweisen und mit sich ausgehend von dieser Formfläche durch das jeweilige Profilsegment nach außen erstreckenden Luftableitwegen versehen sind, wobei zumindest ein Teil der Luftableitwege wenigstens formflächenseitig aus einer Vielzahl miteinander in Verbindung stehender Mikrokanäle und Mikroporen besteht, wobei sich die Luftableitwege zumindest teilweise bis zur Rückenfläche des Profilsegments erstrecken, wobei sich die Reifenvulkanisierform erfindungsgemäß dadurch auszeichnet, dass in die Formfläche ein Lamellenkörper eingesetzt ist.

Die gestellte Aufgabe wird also auf überraschend einfache Art und Weise dadurch gelöst, dass der Lamellenkörper in die aus porösem gesinterten Material bestehende Formfläche eingesetzt wird. Hierdurch kann auf jedlich zusätzliche Entlüftungsbohrungen verzichtet werden, da das gesinterte Material der Formfläche insgesamt porös ist und Luft durch die Poren der Formfläche über zentrale Kanäle bzw. Bohrungen abgeleitet werden kann.

Unter dem Begriff Lamellenkörper sei ein Gebilde verstanden, das aus einem einzigen Blechstreifen mit einer oder mehreren wirksamen Schneidkanten, oder aus einer Vielzahl von Lamellen mit jeweiligen Schneidkanten bestehen kann, wobei der Lamellenkörper mehr- oder einstückig ausgebildet sein kann.

In vorteilhaften Ausgestaltungen der Erfindung ist vorgesehen, dass der Lamellenkörper aus einzelnen Blechen besteht, wobei alternativ vorgesehen ist, dass der Lamellenkörper ein einstückiger Körper mit einer Vielzahl von Schneidkanten, insbesondere von 6 bis 50 Schneidkanten, ist.

In weiteren praktischen Ausgestaltungen der Erfindung kann vorgesehen sein, dass die Formfläche vollflächig auf den Grundkörper aufgebracht ist oder, alternativ, dass eine Vielzahl von Formflächen als Einsätze in den Grundkörper eingesetzt ist, wobei jedem Einsatz ein Entlüftungskanal zugeordnet ist.

In einer weiteren praktischen Ausgestaltung der Erfindung kann vorgesehen sein, dass die Mikrokanäle und Mikroporen einen Durchmesser von 10 bis 200 Mikrometer, vorzugsweise von 80 bis 200 Mikrometer aufweisen. Diese Porengröße hat sich als besonders vorteilhaft herausgestellt, da durch diese Luft schnell und sicher aus der Form abgeleitet werden kann, ohne dass Kautschuk in die Poren eindringt und die Luftkanäle hierdurch verstopft. Auch das Ausformen des Reifens lässt sich hierdurch positiv beeinflussen, ebenso das Aussehen der Lauffläche des Fahrzeugluftreifens selbst. Bei geschickter Einstellung der Porengröße lässt sich eine Oberfläche des Laufstreifens des Fahrzeugluftreifens erzeugen, welche dann den bekannten Lotuseffekt zeigt, d. h., dass Schmutz und andere unerwünschte Partikel nicht an der Oberfläche des Laufstreifens bzw. der Seitenwand des Fahrzeugluftreifens haften bleiben. Dies ist insbesondere im Neuzustand des Reifens von Vorteil, da er sich dann einem Kunden optisch besonders ansprechend präsentiert, da er tiefschwarz und glänzend erscheint. Aber auch, insbesondere wenn ein Formsegment der erfindungsgemäßen Reifenvulkanisationsform zur Schaffung der Seitenwandbereiche des Fahrzeugluftreifens eingesetzt wird, kann dies auch bei längerem Betrieb des Fahrzeugluftreifens positiv erscheinen, da sich durch den Lotuseffekt ein Selbstreinigungseffekt der Seitenwand einstellt und die Seitenwand stets sauber bleibt.

In praktischen Ausgestaltungen der Erfindung kann vorgesehen sein, dass für das Material der Formfläche sinterbarer Stahl oder sinterbares Aluminium verwendet wird; ebenso kann vorgesehen sein, dass für den Lamellenkörper sinterbarer Stahl oder sinterbares Aluminium verwendet wird. Ferner kann auch ein unter der Handelsbezeichnung Alumide® durch die Firma EOS GmbH Electro Optical Systems, D-82152 Planegg, erhältliches metallgefülltes Kunststoffpulver verwendet werden. Alumide® , welches lasersinterfähig ist, besteht zu etwa 70% aus Kunststoff, und zu etwa 30% aus Aluminium.

Des Weiteren kann vorgesehen sein, dass das Profilsegment mit einem Vakuumanschluss versehen ist. Wird ein Vakuum angelegt, kann beim Zusammenfahren der Reifenvulkanisierform eingeschlossene Luft noch schneller abgeleitet werden.

Gemäß eines erfindungsgemäßen Verfahrens wird das Profilsegment der erfindungsgemäßen Reifenvulkanisierform dadurch hergestellt, dass mittels eines an sich bekannten Laserschmelzverfahrens oder stereolithographischem Verfahrens, das auch unter der Bezeichnung Rapid Prototyping bekannt ist, auf dem Grundkörper die Formfläche aus einem sinterfähigen Pulvermaterial aufgebaut wird und dass anschließend auf die derart geschaffene Formfläche Schlitze in die Formfläche eingeschnitten und mit dem Lamellenkörper verfüllt werden.

In weiteren vorteilhaften Ausgestaltungen der Erfindung kann vorgesehen sein, dass die Schlitze während des Laserschmelzverfahrens ausgespart werden. Hierbei wird das Laserschmelzverfahren so durchgeführt, dass Bereiche der späteren Schlitze nicht mit dem Laserstrahl beaufschlagt werden, so dass nach Beendigung des Prozesses Schlitze stehenbleiben, welche eine Breite von 0,2 bis 0,5 mm aufweisen können. Entsprechend soll auch gemäß einer besonders bevorzugten Ausführungsform der Erfindung der Lamellenkörper Stirnkanten aufweisen, welche eine Breite von 0,2 bis 0,5 mm haben.

Gemäß praktischen Ausführungsformen eines erfindungsgemäßen Verfahrens ist vorgesehen, dass die Schlitze nach Beendigung des Laserschmelzverfahrens in die Oberfläche der Formfläche eingearbeitet werden. Hierbei in einer besonders bevorzugten Ausführungsform vorgesehen sein, dass die Schlitze durch ein Wasserstrahlschneiden in die Formfläche eingearbeitet werden.

Da auch die Lamellen eine Breite von 0,2 bis 0,5 mm aufweisen, also extrem dünnwandig ausgebildet sind, wird es besonders bevorzugt sein, wenn die Schlitze mittels Wasserstrahl in die Formoberfläche eingearbeitet werden. Hierzu wird ein mit Abrasivmittel versehener Wasserstrahl mit ca. 3.000 bis 4.000 bar durch eine Düse auf die Formoberfläche gelenkt und entsprechend der gewünschten Schlitzkonfiguration über die Formfläche verfahren, so dass dann Schlitze mit einer definierten Tiefe und Breite entstehen.

Ferner kann vorgesehen sein, dass während des Laserschmelzens der Lamellenkörper einstückig auf die Formfläche aufgebaut wird.

Weitere Vorteile und Ausgestaltung der Erfindung werden anhand eines Ausführungsbeispiels in der Zeichnung näher beschrieben. Diese zeigt:
- Fig. 1:: ein erstes Ausführungsbeispiel eines Profilsegments einer erfindungsgemäßen Reifenvulkanisierform im Radialschnitt,
- Fig. 2: ein zweites Ausführungsbeispiel eines Profilsegmentes einer erfindungsgemäßen Reifenvulkanisierform im Radialschnitt
- Fig. 3: ein Detail eines Profilsegmentes aus Figur 2, und
- Fig. 4: ein drittes Ausführungsbeispiel eines Profilsegmentes einer erfindungsgemäßen Reifenvulkanisierform in Draufsicht.

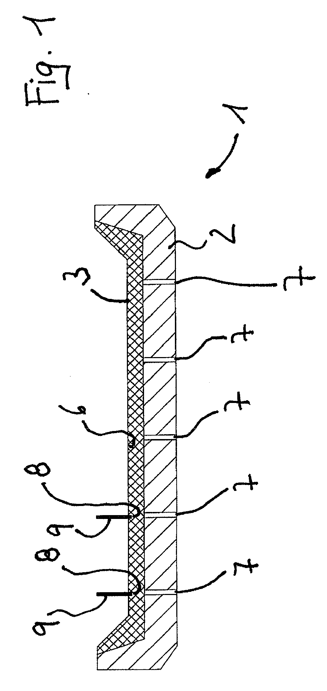

In Figur 1 ist ein Ausführungsbeispiels eines Profilsegmentes 1 einer nicht weiter dargestellten Reifenvulkanisierform in Radialschnitt dargestellt. Das Profilsegment besteht aus einem außenseitigen Grundkörper 2, welcher einstückig mit einer innenseitig angeordneten profilierten Formfläche 3 verbunden ist. Die Formfläche 3 weist Erhöhungen 4 und Vertiefungen 5 auf (Figur 4), welche das Laufflächenprofil eines nicht dargestellten Fahrzeugluftreifens formen. Die Formfläche 3 besteht aus einem gesinterten Stahlmaterial, welches mittels eines an sich bekannten Laserschmelzverfahrens aus pulvrigem Material schichtweise zu der profilierten Formfläche aufgebaut wurde. Über den gesamten Querschnitt und die gesamte Breite weist die Formfläche 3 in Figur 1 nur angedeutete Mikrokanäle und Mikroporen 6 auf. Durch die Mikroporen 6 kann Luft aus der Reifenvulkanisierform zentrale Entlüftungsbohrungen 7 aus der Reifenvulkanisierform abgezogen werden.

In Schlitze 8 ist jeweils ein Lamellenkörper 9 eingesetzt.

Hierzu können die Schlitze 8 entweder direkt beim Laserschmelzen durch Aussparung der für die Schlitze vorgesehenen Bereiche hergestellt werden, oder es können nach Abschluss des Herstellungsprozess der Formfläche 3 die Schlitze 8 durch Fräsen, Laserschneiden oder durch Wasserstrahlschneiden in die Formfläche 3 eingebracht werden.

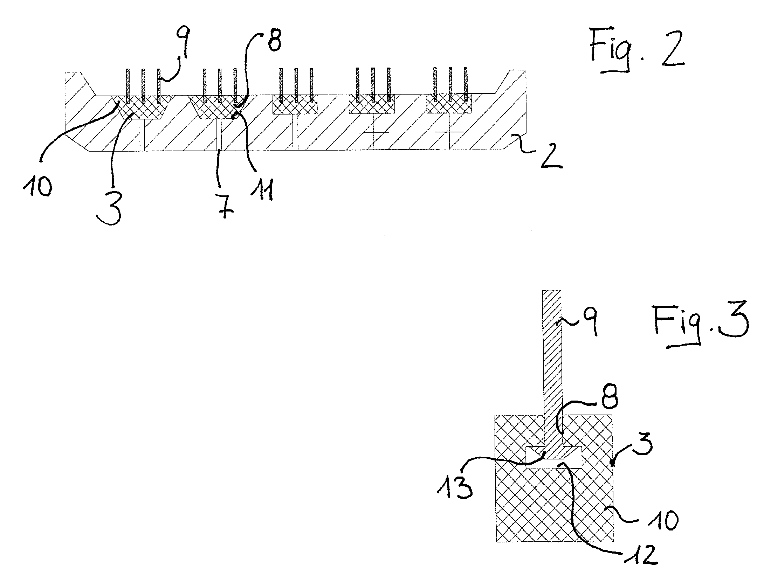

In Figur 2 ist ein zweites Ausführungsbeispiel eines Profilsegments 1 einer erfindungsgemäßen Reifenvulkanisierform im Radialschnitt dargestellt. Hier besteht die Formfläche 3 jeweils aus Einsätzen 10, welche in entsprechende Vertiefungen 11 in den aus Stahl bestehenden Grundkörper 2 eingebracht wurden. Die Querschnittskontur der Einsätze 10 kann auch schwalbenschwanzförmig sein, so dass separat hergestellte Einsätze 10 aus gesintertem Material als separates Bauteil in den Grundkörper 2 eingeschoben und entsprechend ohne größeren Aufwand gegen baugleiche Teile ausgetauscht werden können. Auch in diesem Fall weisen die Einsätze 10 Schlitze 8 auf, in welche Lamellenkörper 9 eingesetzt sind.

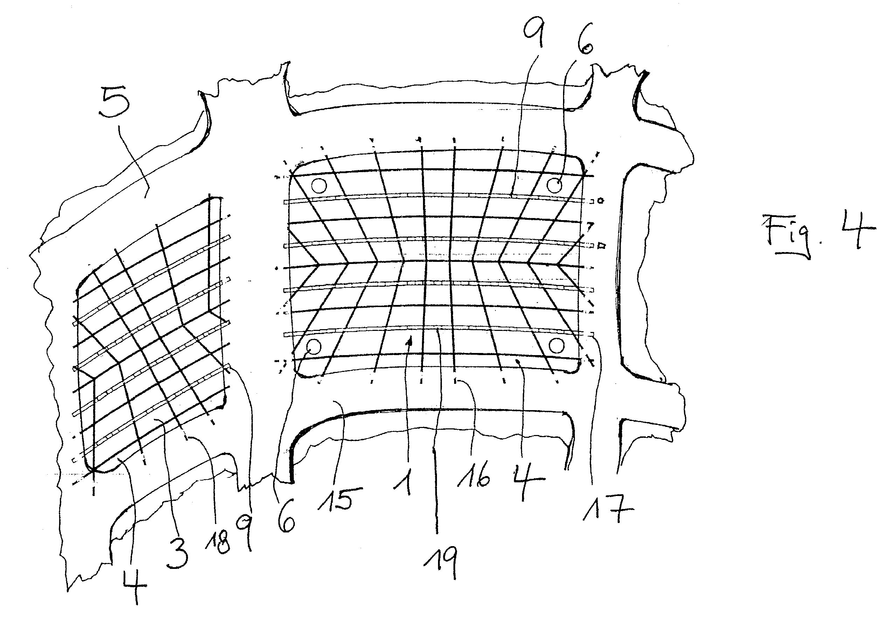

In Figur 3 ist ein Detail einer Formfläche 3 aus Figur 2 dargestellt. Diese weist einen Schlitz 8 mit einer kavernenartigen Erweiterung 12 auf, welche dazu dient, einen mit einem Widerhaken 13 versehenen Lamellenkörper 9 aufzunehmen.

In Figur 9 ist ein Ausriß eines Profilsegmentes 1 mit eingesetztem Lamellenkörper 9 in Aufsicht auf die radiale Innenseite der Formfläche 3 dargestellt. Diese weist Erhebungen 4 mit Stegen 15 zur Formung von Rillen und Nuten im Laufflächenprofil eines Fahrzeugluftreifens auf. Die Stege 15 begrenzen jeweils Vertiefungen 5, welche in Verbindung mit den Stegen 15 zur Formung eines Profilklotzes des Laufflächenprofils dienen. In der Vertiefung 5 ist jeweils ein Lamellenkörper 9 angeordnet, wobei diese über die Fortsätze 16, 17, 18 kraftschlüssig mit dem Profilsegment 1 der Reifenvulkanisationsform verbunden ist. In der in Figur 4 rechten Ausnehmung 4 sind vier Mikroporen übertrieben groß angedeutet, durch welche Luft beim Anpressen der Reifenvulkanisationsform an einen Reifenrohling entweichen kann. Die Schlitze 8 zum Einfügen der Fortsätze 16, 17, 18 in die Reigfenvulkanisationsform können mittels Wasserstrahlerodieren geschaffen werden.

Der Lamellenkörper 9 stellt sich als einstückiges Bauteil dar, welcher über eine Vielzahl von als Schneidkanten dienenden Stirnflächen 14 aufweist. Der Lamellenkörper 9 aus Figur 4 ruht mit seinen unteren Kanten ebenfalls in Schlitzen, welche in das mit Mikroporen 6 versehene Material der Formfläche 3 eingebracht wurden. Der Lamellenkörper kann zusätzliche Bohrungen 19 aufweisen, welche der zusätzlichen Luftableitung dienen.

### Bezugszeichenliste

### (Teil der Beschreibung)

- 1: Profilsegment
- 2: Grundkörper
- 3: Formfläche
- 4: Erhebung
- 5: Vertiefung
- 6: Mikropore
- 7: Entlüftungsbohrung
- 8: Schlitz
- 9: Lamellenkörper
- 10: Einsatz
- 11: Vertiefung
- 12: Kaverne
- 13: Widerhaken
- 14: Stirnfläche
- 15: Steg
- 16: Fortsatz
- 17: Fortsatz
- 18: Fortsatz
- 19: Bohrung

## Patentansprüche

1. Reifenvulkanisierform mit mehreren zu einer umfangsmäßig geschlossenen Form zusammenfügbaren Profilsegmenten (1), welche jeweils einen außenseitigen Grundkörper (2) und innenseitig wenigstens eine profilierte Formfläche (3) aus gesintertem Material aufweisen und mit sich ausgehend von dieser Formfläche (3) durch das jeweilige Profilsegment (1) nach außen erstreckenden Luftableitwegen versehen sind, wobei zumindest ein Teil der Luftableitwege wenigstens formflächenseitig aus einer Vielzahl von miteinander in Verbindung stehenden Mikrokanälen und Mikroporen (6) besteht, wobei sich die Luftableitwege zumindest teilweise bis zur Rückenfläche des Profilsegments (1) erstrecken, **dadurch gekennzeichnet, dass** in die Formfläche (3) ein Lamellenkörper (9) eingesetzt ist.

2. Reifenvulkanisierform nach Anspruch 1, **dadurch gekennzeichnet, dass** der Lamellenkörper (9) aus einzelnen Blechen besteht.

3. Reifenvulkanisierform nach Anspruch 1, **dadurch gekennzeichnet, dass** der Lamellenkörper (9) ein einstückiger Körper mit einer Vielzahl von Schneidkanten (14), insbesondere mit einer Anzahl von 6 bis 50 Schneidkanten (14), ist.

4. Reifenvulkanisierform nach wenigstens einem der vorangegangenen Ansprüche, **dadurch gekennzeichnet, dass** die Formfläche (3) vollflächig auf den Grundkörper (2) aufgebracht ist.

5. Reifenvulkanisierform nach wenigstens einem der Ansprüche 1 bis 3, **dadurch gekennzeichnet, dass** eine Vielzahl von Formflächen (3) als Einsätze (10) in den Grundkörper (2) eingesetzt ist, wobei jedem Einsatz (10) ein Entlüftungskanal (7) zugeordnet ist.

6. Reifenvulkanisierform nach wenigstens einem der vorangegangenen Ansprüche, **dadurch gekennzeichnet, dass** in die Formfläche (3) Schlitze (8) eingebracht sind, wobei der Lamellenkörper (9) in die Schlitze (8) eingesetzt ist.

7. Reifenvulkanisierform nach Anspruch 6, **dadurch gekennzeichnet, dass** die Schlitze (8) eine Breite von 0,2 bis 0,5 mm aufweisen.

8. Reifenvulkanisierform nach Anspruch 6, **dadurch gekennzeichnet, dass** der Lamellenkörper Stirnkanten (14) mit einer Breite von 0,2 bis 0,5 mm aufweist.

9. Reifenvulkanisierform nach einem der vorangegangenen Ansprüche, **dadurch gekennzeichnet, dass** die Porengröße der Mikroporen (6) 10 bis 200 µm, vorzugsweise 80 bis 200 µm beträgt.

10. Reifenvulkanisierform nach einem der vorangegangenen Ansprüche, **dadurch gekennzeichnet, dass** die Formfläche (3) und/oder der Lamellenkörper (9) aus gesintertem Stahl besteht.

11. Reifenvulkanisierform nach einem der Ansprüche 1 bis 5, **dadurch gekennzeichnet, dass** die Formfläche (3) und/oder der Lamellenkörper (9) aus gesintertem Aluminium besteht.

12. Reifenvulkanisierform nach einem der vorangegangenen Ansprüche, **dadurch gekennzeichnet, dass** die Mikroporen (6) des Profilsegments (1) in Verbindung mit einer Vakuumquelle stehen.

13. Verfahren zur Herstellung einer Reifenvulkanisierform wenigstens nach Anspruch 1, **dadurch gekennzeichnet, dass** auf den Grundkörper (2) mittels eines Laserschmelzverfahrens die Formfläche (3) aus einem pulverförmigen sinterfähigen Material aufgebaut wird, und dass anschließend nach Erzeugung der Formfläche (3) Schlitze in die Formfläche (3) eingeschnitten und mit dem Lamellenkörper (9) verfüllt werden.

14. Verfahren nach Anspruch 13, **dadurch gekennzeichnet, dass** die Schlitze (8) während des Laserschmelzverfahrens ausgespart werden.

15. Verfahren nach Anspruch 13, **dadurch gekennzeichnet, dass** die Schlitze (8) nach Beendigung des Laserschmelzverfahrens in die Oberflächen der Formfläche (3) eingearbeitet werden.

16. Verfahren nach Anspruch 15, **dadurch gekennzeichnet, dass** die Schlitze durch Wasserstrahlschneiden in die Oberflächen der Formfläche (3) eingearbeitet werden.

17. Verfahren nach wenigstens einem der Ansprüche 13 bis 16, **dadurch gekennzeichnet, dass** während des Laserschmelzens der Lamellenkörper (9) einstückig auf die Formfläche (3) aufgebracht wird.
